# EUROPÄISCHE PATENTANMELDUNG

(11) **EP 1 792 854 A1**
(43) Veröffentlichungstag der Anmeldung: **06.06.2007**
(21) Anmeldenummer: 05026210.4
(22) Anmeldetag: 01.12.2005
(51) Int. Cl.: B65G 11/06

(54) **Rutsche zum Transportieren von Waren**

(71) Anmelder: Rowa Automatisierungssysteme GmbH & Co. KG, 53539 Kelberg (DE)
(72) Erfinder: Hellenbrand, Christoph, 56761 Kaifenheim (DE)
(74) Vertreter: Schmidt, Frank-Michael

(57) **Zusammenfassung**

Die Vorrichtung dient zum Transportieren von Waren oder Warenpackungen, insbesondere von Medikamentenpackungen, unter der Wirkung der Schwerkraft. Hierzu weist sie eine schraubenlinienförmig von oben nach unten führende Rutschfläche (1) auf, die eine radial außen begrenzte, radial innen offene Rinne (2) bildet. Die Rutschfläche (1) ist in einem äußeren Rohr (3) angeordnet, welches die radial äußere Begrenzung der Rinne (2) bildet.

## Beschreibung

Die Erfindung betrifft eine Vorrichtung zum Transportieren von Waren, insbesondere von Warenpackungen, unter der Wirkung der Schwerkraft.

Derartige Vorrichtungen dienen vor allen Dingen dazu, Warenpackungen, die selektiv aus einem Lager oder Magazin abgerufen werden, zu einer darunter befindlichen Station zu transportieren, beispielsweise in ein unteres Stockwerk. Wesentliches Anwendungsgebiet ist der Transport von Medikamentenpackungen.

Die Packungen wandern auf einer Rutschfläche nach unten, die ohne weiteres gradlinig ausgebildet sein kann. Bekannt aus der Praxis sind außerdem Vorrichtungen mit einer schraubenlinienförmigen Rutschfläche, da letztere den Vorteil eines geringeren Platzbedarfs aufweist. Die Rutschfläche wird bisher als beidseitig begrenzte Rinne ausgebildet, die sich um eine zentrale Säule herumwindet. Die Säule bildete die radial innere Begrenzung der Rinne.

Problematisch bei der aus der Praxis bekannten Vorrichtung ist das Verklemmen und Hängenbleiben der Warenpackungen während des Transports. Um dieser Gefahr zu begegnen, muß die Breite der Rinne, bezogen auf die zu transportierende maximale Packungsgröße, entsprechend überdimensioniert sein. Ein hoher Platzaufwand ist die Folge.

Der Erfindung liegt die Aufgabe zugrunde, den Platzaufwand der Transportvorrichtung zu vermindern, und zwar ohne die Gefahr eines Verklemmens und Hängenbleibens der Waren bzw. Warenpackungen.

Zur Lösung dieser Aufgabe schafft die Erfindung eine vorrichtung zum Transportieren von Waren, insbesondere von Warenpackungen, unter der Wirkung der Schwerkraft, mit einer schraubenlinienförmig von oben nach unten führenden Rutschfläche, die eine radial außen begrenzte, radial innen offene Rinne bildet.

Erfindungsgemäß wird auf die zentrale Säule der aus der Praxis bekannten Vorrichtung verzichtet. Die Rinne windet sich also um einen zentralen Freiraum, dessen Durchmesser wesentlich kleiner sein kann als der der bekannten Säule und der dennoch dafür sorgt, daß die Warenpackungen selbst dann nicht hängenbleiben, wenn sie extrem verkanten. Überraschenderweise wurde gefunden, daß die radial innen nicht begrenzte Rinne eine präzise und störungsfreie Führung der Waren oder Warenpackungen gewährleistet, und zwar dies bei minimaler Rinnenbreite und dementsprechend bei minimalem Durchmesser der Vorrichtung, also unter Erzielung maximaler Platzersparnis.

Aus Fertigungsgründen wird ferner vorgeschlagen, daß die Erzeugenden der Fläche des Rinnenbodens radial gerichtete Grade sind, die vorzugsweise in horizontalen Ebenen verlaufen. Die Warenpackungen werden auf ihrem nach unten führenden weg zügig beschleunigt und dabei von der Fliegkraft in Richtung auf den radial äußeren Rand der Rinne gedrängt. Somit läßt sich in einfacher Weise eine optimale Transportgeschwindigkeit einstellen, so daß einerseits für einen zügigen Transport gesorgt wird und andererseits die Warenpackungen am Ende des Transportweges nicht übermäßig abrupt abgebremst werden müssen. Dabei beträgt die Steigung der Rinne vorzugsweise 30°.

Als Alternative zu einem Rinnenboden, dessen radial gerichtete, gradlinige Erzeugende in horizontalen Ebenen verlaufen, besteht auch die Möglichkeit, den Boden der Rinne zu deren radial innerem oder äußerem Rand hin nach unten zu neigen. Ferner kann der Querschnitt der Rinne eine nach unten gerichtete wölbung aufweisen.

Besonders günstige Transportbedingungen ergeben sich dadurch, daß der radial innere Rand der Rinne nach unten abgebogen, vorzugsweise abgerundet ist. Man vermeidet also eine scharfe Kante, die den Transport behindern und das Transportgut gegebenenfalls sogar beschädigen könnte.

Eine wesentliche Weiterbildung der Erfindung besteht darin, daß die Rutschfläche in einem Rohr angeordnet ist, welches die radial äußere Begrenzung der Rinne bildet. Es ergibt sich eine konstruktiv äußerst einfache und dabei sehr robuste Gestaltung. Die Rinne kann mit einer Rundung in das äußere Rohr übergehen, wobei dies allerdings zur Erzielung eines zuverlässigen Transports keineswegs erforderlich ist.

Vorzugsweise beträgt der Durchmesser des Rohres ca. 400mm. Es wurde gefunden, daß dieses relativ geringe Abmaß ausreicht, die Standartgrößen der handelsüblichen Medikamentenpackungen zuverlässig zu transportieren.

Nach einem weiteren vorteilhaften Merkmal wird vorgeschlagen, daß die Eintrittskante der Rinne mit dem zugehörigen Radius entgegen der Transportrichtung einen spitzen Winkel bildet. Dies erleichtert das Einlegen der Waren oder warenpackungen in die Vorrichtung.

Der Erfindung wird im folgenden anhand eines bevorzugten Ausfuhrungsbeispiels im Zusammenhang mit der beiliegenden Zeichnung näher erläutert. Die Zeichnung zeigt in:
Figur 1 in schematischer Darstellung einen zentralen Vertikalschnitt durch eine Vorrichtung nach der Erfindung;
Figur 2 einen Grundriß der Vorrichtung nach Figur 1.

Die Vorrichtung nach dem Ausführungsbeispiel dient zum Transportieren von Medikamentenpackungen unter der Wirkung der Schwerkraft. Sie weist eine Rutschfläche 1 auf, die eine radial außen begrenzte, radial innen offene Rinne 2 bildet. Die Erzeugenden der Fläche des Rinnenbodens sind radial gerichtete Grade, die in horizontalen Ebenen verlaufen. Die Steigung der Rinne beträgt ca. 30° bis 50°, vorzugsweise 40°.

Die äußere Begrenzung der Rinne wird von einem Rohr 3 gebildet, dessen Durchmesser ca. 400mm beträgt.

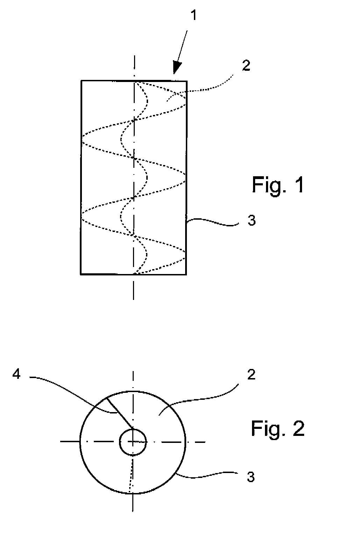

Wie aus Figur 2 ersichtlich, weist die Rinne 2 eine Eintrittskante 4 auf, die mit dem zugehörigen Radius entgegen der Transportrichtung einen spitzen Winkel bildet. Dies erleichtert das Einlegen der Packungen in die Vorrichtung.

Aufgrund der Tatsache, daß die Rinne 2 nur radial außen begrenzt, radial innen jedoch offen ist, lassen auch relativ große Packungen zuverlässig, das heißt, ohne die Gefahr eines Verklemmens durch verkanten, von oben zu einer darunter befindlichen Station transportieren, und zwar bei minimalem Platzbedarf.

Im Rahmen der Erfindung sind durchaus Abwandlungsmöglichkeiten gegeben. So kann der radial innere Rand der Rinne nach unten abgebogen, vorzugsweise abgerundet sein, um die Transportverhältnisse zu verbessern und jegliche Gefahr einer Verletzung der Packungen zu vermeiden. Auch kann die Rinne einwärts gewölbt oder zu ihrem radial inneren Rand hin bzw. zu ihrem radial äußeren Rand hin nach unten geneigt sein. In jedem Falle besteht die Möglichkeit, die Rinne über eine Rundung an das äußere Rohr anzuschließen. Die Steigung der Rinne und die Abmaße des äußeren Rohres sind in Abhängigkeit von den Anforderungen und Gegebenheiten variabel. Auch kann anstelle des äußeren Rohres eine käfigartige Struktur verwendet werden, allerdings unter der Voraussetzung, daß die Rinne eine radial äußere Begrenzung erhält.

## Patentansprüche

1. Vorrichtung zum Transportieren von Waren, insbesondere von Warenpackungen, unter der Wirkung der Schwerkraft, mit einer schraubenlinienförmig von oben nach unten führenden Rutschfläche (1), die eine radial außen begrenzte, radial innen offene Rinne (2) bildet.

2. Vorrichtung nach Anspruch 1, **dadurch gekennzeichnet, daß** die Erzeugenden der Fläche des Rinnenbodens radial gerichtete Grade sind, die vorzugsweise in horizontalen Ebenen verlaufen.

3. Vorrichtung nach Anspruch 1 oder 2, **dadurch gekennzeichnet, daß** die Steigung der Rinne (2) 30° bis 50°, vorzugsweise 40°, beträgt.

4. Vorrichtung nach einem der Ansprüche 1 bis 3, **dadurch gekennzeichnet, daß** der radial innere Rand der Rinne (2) nach unten abgebogen, vorzugsweise abgerundet ist.

5. Vorrichtung nach einem der Ansprüche 1 bis 4, **dadurch gekennzeichnet, daß** die Rutschfläche (1) in einem Rohr (3) angeordnet ist, welches die radial äußere Begrenzung der Rinne (2) bildet.

6. Vorrichtung nach Anspruch 5, **dadurch gekennzeichnet, daß** der Durchmesser des Rohres (3) ca. 400mm beträgt.

7. Vorrichtung nach einem der Ansprüche 1 bis 6, **dadurch gekennzeichnet, daß** die Eintrittskante (4) der Rinne (2) mit dem zugehörigen Radius entgegen der Transportrichtung einen spitzen Winkel bildet.
